# EUROPEAN PATENT SPECIFICATION

(11) **EP 4 521 563 B1**
(45) Date of publication and mention of the grant of the patent: **28.10.2026**
(21) Application number: 24198733.8
(22) Date of filing: 05.09.2024
(51) Int. Cl.: H01R 13/58, H01R 13/59

(54) **CABLE GLAND FOR AN ELECTRICAL CONNECTOR AND ELECTRICAL CONNECTOR**
KABELVERSCHRAUBUNG FÜR EINEN ELEKTRISCHEN STECKVERBINDER UND ELEKTRISCHER STECKVERBINDER
PRESSE-ÉTOUPE POUR CONNECTEUR ÉLECTRIQUE ET CONNECTEUR ÉLECTRIQUE

(30) Priority: 06.09.2023 US 202363536738 P
(43) Date of publication of application: 12.03.2025
(73) Proprietor: HARTING Electric Stiftung & Co. KG, 32339 Espelkamp (DE)
(72) Inventor: Samaniego, Juan, Schaumburg (US); Griepenstroh, Sebastian, Lübbecke (DE)
(74) Representative: Dr. Träger & Strautmann PAe PartG mbB

(56) References cited:
- GB-A- 811 358
- US-A- 4 191 443

## Description

### TECHNICAL FIELD

The present disclosure relates to cable glands for electrical connectors. In particular, the present invention is directed to a cable gland according to the preamble of claim 1.

### BACKGROUND

Plug and socket connectors are usually made up of a male plug and a female socket. The plug typically includes pin contacts, and the socket typically includes receptacle contacts. Sockets are often permanently fixed to a device as in a chassis connector, and plugs are attached to a cable. Plugs and sockets may both be connected to cables, for example to connect two cables to one another.

Plugs generally have one or more metal contacts, also referred to as terminals, which are inserted into openings in the mating socket. The connection between the mating metal parts must be sufficiently tight to make a good electrical connection and complete a circuit.

A cable gland, which may also be referred to a cord grip, cable strain relief, cable connector or cable fitting, is a device designed to attach and secure the end of an electrical cable to the connector. A cable gland provides strain-relief in that a pulling force acting on the cable is transferred, through the cable gland, into a housing of the connector and not into the metal contacts.

Prior art document GB 811 358 A is directed to electric cable and connectors with multiple contacts and strain relief arms for securing the cable in the connector. Document US 4 191 443 A discloses an electrical connector system with chuck elements for strain relief.

### SUMMARY

The invention relates to a cable gland according to claim 1. In particular, a cable gland for an electrical connector, comprises an outer shell and a plurality of strain relief grippers circumferentially distributed around a center axis within the outer shell, wherein each of the strain relief grippers comprises a gripper body having an inwardly convex gripping surface, a plurality of gripping teeth formed in the gripping surface, and a resilient pivot arm, about which the gripper body can pivot forwardly and rearwardly. In some aspects, the techniques described herein relate to a cable gland for an electrical connector. The cable gland includes an outer shell and a plurality of strain relief grippers circumferentially distributed around a center axis within the outer shell. Each of the strain relief grippers includes a gripper body having an inwardly convex gripping surface. A plurality of gripping teeth are formed in the gripping surface. The gripper body can pivot forwardly and rearwardly about a resilient pivot arm.

The cable gland includes an annular gripper base and a plurality of circumferentially distributed support arms extending rearwardly parallel to the center axis from the annular gripper base. In this configuration, one of the strain relief grippers may be connected to a rear end of each of the support arms. In particular, each of the support arms is able to form part of the gripping configuration.

The rear ends of the circumferentially distributed support arms preferably abut an inner wall of the outer shell. This configuration may suit to reliably form a surrounding cable gland.

The cable gland includes a strain relief body having an annular groove. The annular gripper base, the support arms, and the strain relief grippers may be integrally formed as one piece. The annular gripper base is arranged within the annular groove of the strain relief body.

The cable gland may also include an anti-twist protrusion extending radially inwardly from the annular gripper base. The anti-twist protrusion is then preferably seated within a radial groove extension of the annular groove.

The strain relief body may include an external threaded sleeve configured to mesh an internal thread of a plug housing. A further external thread may mesh with an internal thread of the outer shell.

Within the cable gland the gripper body may be configured to pivot back and forth about a pivot point. The plurality of gripping teeth preferably includes a rearmost tooth arranged at a first distance from the pivot point. An intermediate tooth is preferably arranged at a second distance from the pivot point, and a frontmost tooth is preferably arranged at a third distance from the pivot point. In a beneficial geometry, the first distance is smaller than the second distance, and the second distance is smaller than the third distance.

Within the cable gland, two of the strain relief grippers may be arranged on opposite sides of the center axis. Preferably, a width of a cable jacket opening between the two strain relief grippers increases when the two strain relief grippers are pivoted forwardly and decreases when the two strain relief grippers are pivoted rearwardly.

In some aspects, the techniques described herein relate to an electrical connector, in particular according to claim 9 or 10. The connector includes a housing having a threaded cable entry opening. The disclosed cable gland is screwed into the threaded cable entry opening. A cable extends through the cable gland. The gripping teeth engage a jacket of the cable. Rearward movement of the cable within the cable gland causes the gripper bodies to pivot rearwardly which in turn causes the gripping teeth to bite increasingly deeper into the jacket.

Further preferred features and aspects of the invention are discussed in particular in the dependent claims, as well as in the description and figures.

### BRIEF DESCRIPTION OF THE DRAWINGS

Preferred exemplary embodiments of the invention are discussed with reference to the figures of the drawing, wherein:
- FIG. 1: shows an exploded view of a plug and socket connection system.
- FIG. 2: shows a plug housing and an alike socket housing configured to be connected to a respective cable.
- FIG. 3: shows a plug connector with a high pull force cable gland.
- FIG. 4: is a cross-sectional view of the plug connector shown in FIG. 3.
- FIG. 5: is a perspective view of a strain relief body and gripper module.
- FIG. 6: is a perspective view of a gripper module.
- FIG. 7: is a cross sectional view through the gripper module of FIG. 6.

### DETAILED DESCRIPTION

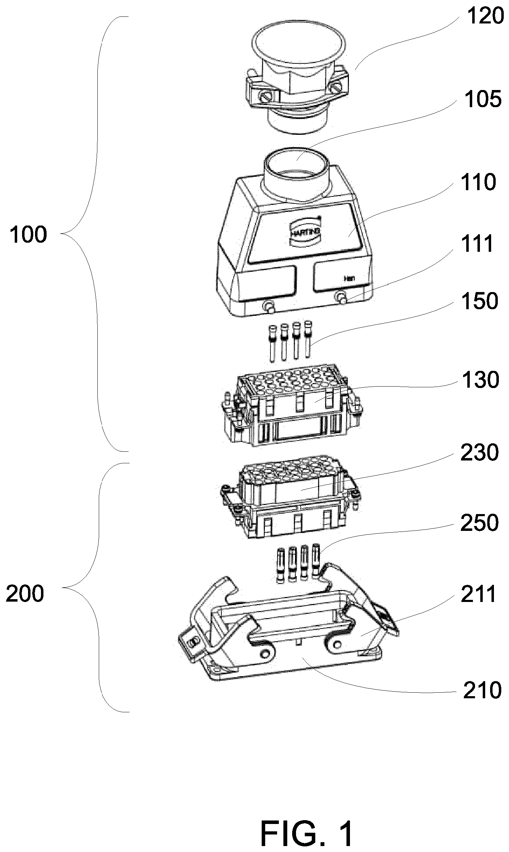

FIG. 1 shows an exploded view of a plug and socket connection system. The system includes a plug connector 100 and a socket connector 200.

The plug connector 100 includes a plurality of pin contacts 150. Pin contacts are sometimes referred to as male contacts. In the context of the present application, they should be more broadly understood to refer to a first type of contacts. When in use, each of the pin contacts 150 is electrically connected to one wire of a cable. Contacts may be in the form of screw terminals, crimp terminals, or cage-clamp terminals. The terms contact and terminal are used interchangeably.

The pin contacts 150 are securely held within a plug insert 130. The plug insert 130 is in turn secured within a plug housing 110. The plug housing 110 may also be referred to as a hood. The plug housing 110 includes a cable entry opening 105, which can be arranged for rear entry or side entry of the cable.

A cable entry protection 120 may be secured to the cable entry opening 105. The cable entry protection 120 can come in various configurations. The cable entry protection 120 can for example be a universal cable gland, a special cable clamp with strain relief, a bell mouthed cable fitting, or an anti-twist device. A cable gland may include one or multiple seals.

The plug connector 100 is configured to mate with a corresponding socket connector 200. The socket connector 200 includes a plurality of receptacle contacts 250. Receptacle contacts are sometimes referred to as female contacts. In the context of the present application, they should be more broadly understood to refer to a second type of contacts.

Each of the receptacle contacts 250 is configured to receive one of the pin contacts 150 to create an electrical connection. The receptacle contacts 250 are securely held within a socket insert 230. The socket insert 230 is secured within a socket housing 210.

The geometries of the plug insert 130 and the socket insert 230 are coordinated such that they can be plugged together. When being plugged together, portions of the plug insert 130 and the socket insert 230 overlap.

A locking mechanism may be provided to lock the plug connector 100 to the socket connector 200. The locking mechanism may include a lever 211 that is pivotally connected to the socket housing 210. The lever 211 may include a recess that engages a locking protrusion 111 of the plug housing 110. When engaged, the lever securely holds the plug connector 100 and the socket connector 200 together. The lever 211 can be pivoted into an unlocked position to disengage the locking protrusion 111 for removing the plug connector 100 from the socket connector 200.

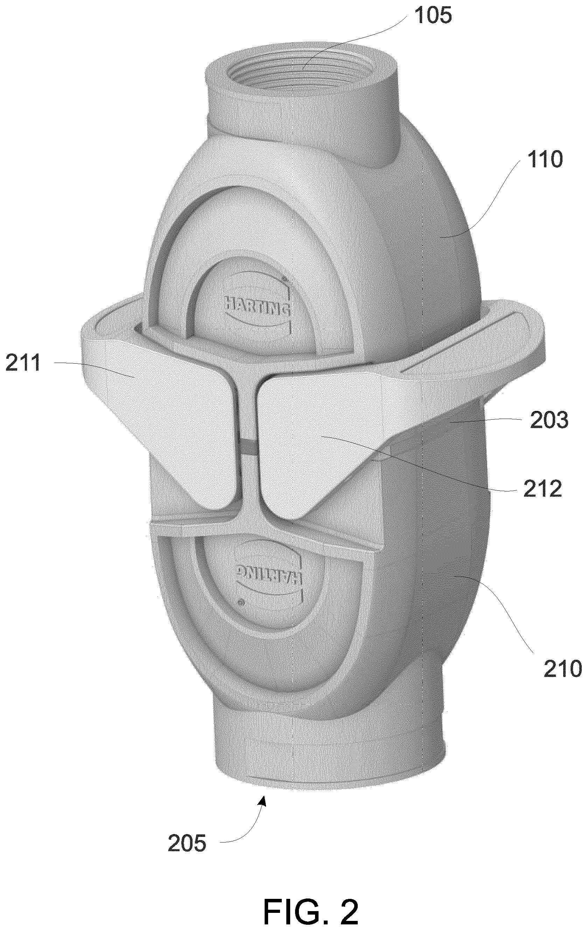

FIG. 1 illustrates an example in which the socket connector 200 is suitable to be permanently fixed to a device as in a chassis connector. FIG. 2 shows an alternative configuration in which the plug housing 110 and the socket housing 210 are alike and both are configured to be connected to a respective cable. Both the plug housing 110 and the socket housing 210 include respective cable entry openings 105, 205.

The plug housing 110 is locked to the socket housing 210 by a locking mechanism. The locking mechanism here includes two levers 211, 212. The levers 211, 212 are shown in the locked state. To unlock the plug housing 110 from the socket housing 210 the levers can be pivoted towards the socket connector 200. A seal 203 is arranged between the plug housing 110 and the socket housing 210.

Within the context of the present application, the plug-in side of the plug connector 100 or the socket connector 200 is referred to as its respective "front." The opposite cable exit side of the plug connector 100 or the socket connector 200 is referred to as its "rear."

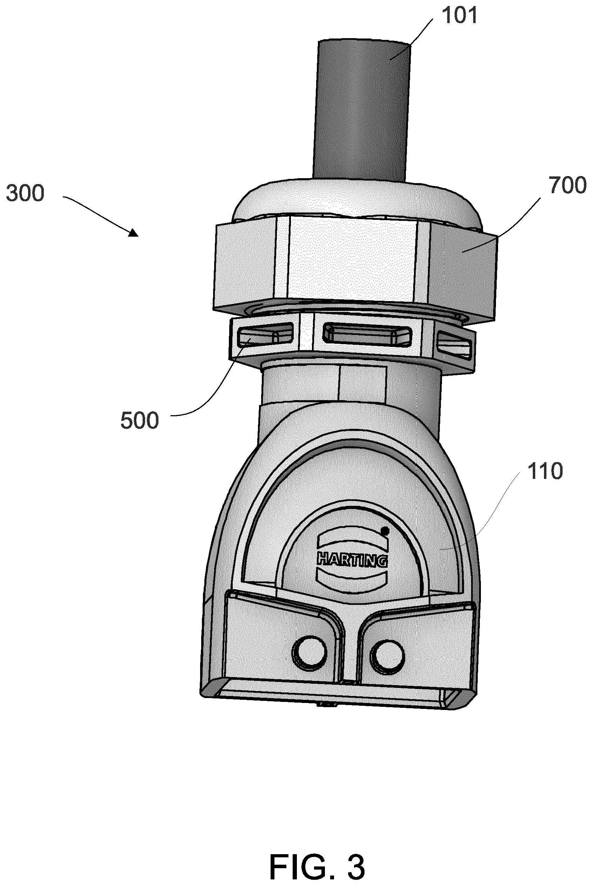

FIG. 3 shows a connector assembly including a plug housing 110, a high pull force cable gland 300, and a cable 101. The high pull force cable gland 300 is connected to the cable entry opening 105 of the plug housing 110. The high force cable gland 300 provides self-reinforcing strain relief for the cable 101 which extends through the high pull force cable gland 300 into the plug connector 100. The high pull force cable gland 300 is designed to resist a pull force of 667 N for 1 minute to address requirements established by the UL1682 standard and meet stringent needs for power connectors used for example in data centers.

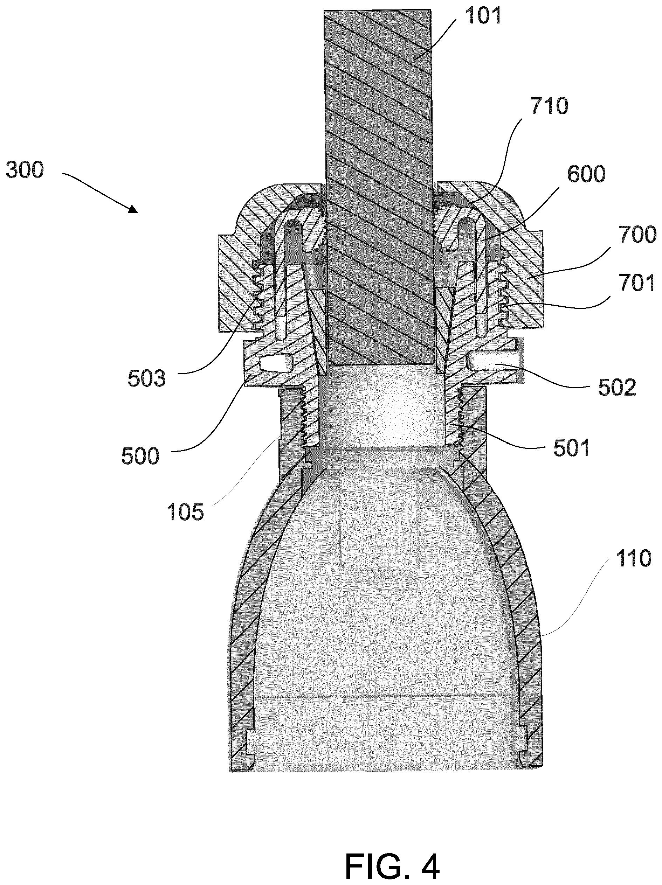

FIG. 4 shows a cross section of the assembly as in FIG. 3. The cable gland 300 includes a strain relief body 500, an outer shell 700, and a gripper module 600.

The strain relief body 500 has, at its front end, an external threaded sleeve 501 which meshes with the internal threaded cable entry opening 105 of the plug housing 110. At its rear end the strain relief body 500 has a further external thread 503 which meshes with an internal thread 701 of the outer shell 700.

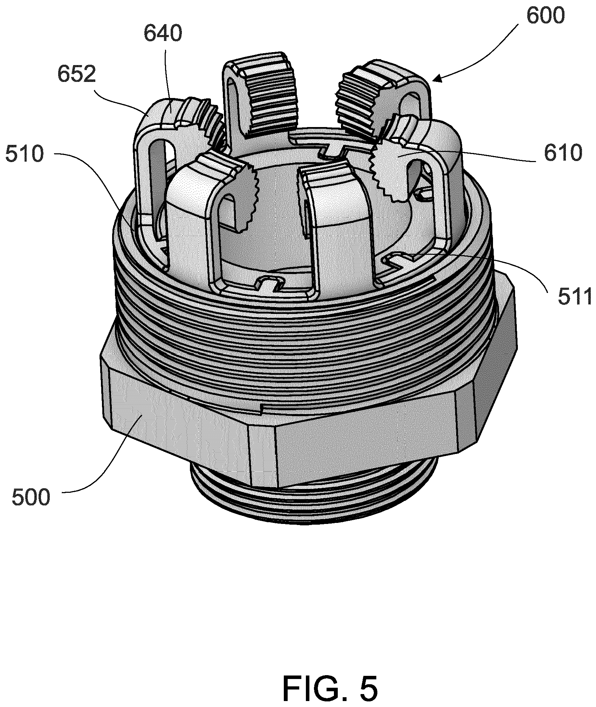

The gripper module 600 is arranged within the outer shell 700 between the strain relief body 500 and the outer shell 700. The gripper module 600 includes a plurality of strain relief grippers 610. The strain relief grippers 610 are circumferentially distributed around a center axis 301 of the high pull force cable gland 300. At least two strain relief grippers 610 are required. As illustrated in FIG. 5, use of six strain relief grippers 610 is preferred.

Each of the strain relief grippers 610 comprises a gripper body 620 having an inwardly convex serrated gripping surface 621. A plurality of gripping teeth 630 is formed in each serrated gripping surface 621. When in use, the inwardly convex serrated gripping surface 621 engages the jacket of a cable 101 that extends in the center axis 301 through the high pull force cable gland 300.

Each gripper body 620 is held by a resilient pivot arm 640. The gripper body 620 can pivot forwardly and rearwardly about the resilient pivot arm 640. The resilient pivot arm 640 extends perpendicular to the center axis 301.

Each gripper body 620 may have a cross sectional shape that is substantially a circular segment. The gripper body 620 is asymmetrically supported at its rear end by the resilient pivot arm 640. A mass center of the gripper body 620 is arranged forwardly of the resilient pivot arm 640.

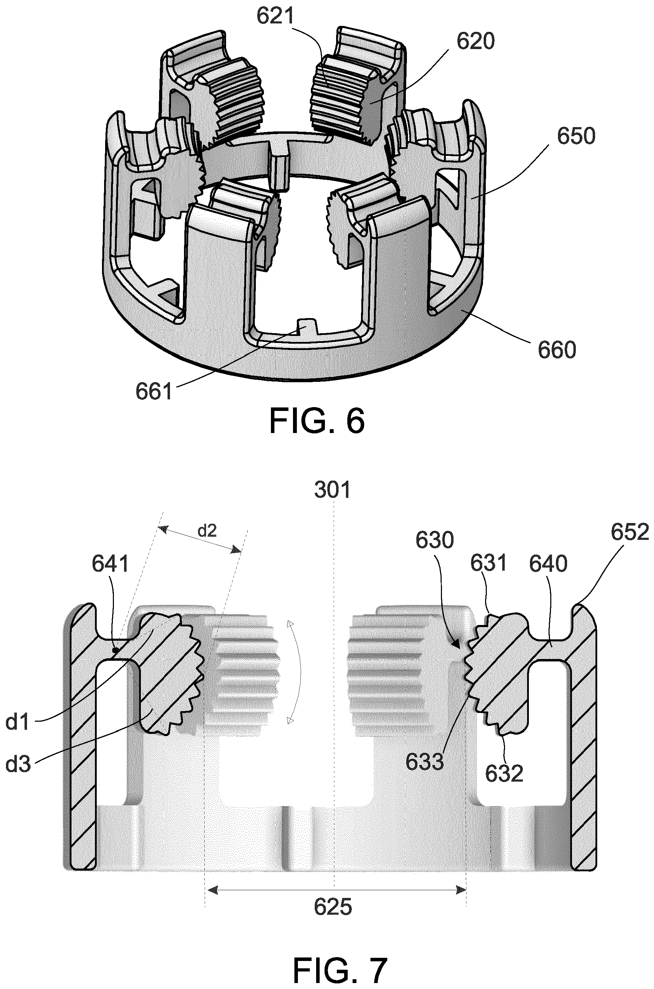

As shown in FIG. 6, the gripper module 600 includes an annular gripper base 660. A plurality of circumferentially distributed support arms 650 extend rearwardly parallel to the center axis 301 from the annular gripper base 660. One of the strain relief grippers 610 is connected to a rear end of each of the support arms 650.

As shown in FIG. 4, the rear ends of the circumferentially distributed support arms 650 abut a conical inner wall 710 of the outer shell 700. The outer shell 700 so supports and pretensions the gripper module 600 against the cable 101.

As shown in FIG. 5, the annular gripper base 660, the support arms 650, and the strain relief grippers 610 may be integrally formed as one piece. The strain relief body 500 includes an annular groove 510. The annular gripper base 660 is arranged within the annular groove 510 of the strain relief body 500. The annular gripper base 660 is axially arranged within the further external thread 503 of the strain relief body 500.

To prevent twisting of the gripper module 600 within the high pull force cable gland 300, one or more anti-twist protrusions 661 may extend radially inwardly from the annular gripper base 660. The one or more anti-twist protrusions 661 are seated within a corresponding number of radial groove extensions 511 of the annular groove 510.

Referring now to FIG. 7, the self-reinforcing operating principle of the high pull force cable gland 300 becomes apparent:
The gripper body 620 is configured to pivot back and forth about a pivot point 641. The plurality of gripping teeth 630 include a rearmost tooth 631 arranged at a first distance d1 from the pivot point 641. An intermediate tooth 633 is arranged at a second distance d2 from the pivot point 641. A frontmost tooth 632 is arranged at a third distance d3 from the pivot point 641.

The first distance d1 is smaller than the second distance d2, and the second distance d2 is smaller than the third distance d3. This causes a width of a cable jacket opening 625 between two opposite strain relief grippers 610 to increase when the two strain relief grippers 610 are pivoted forward. The width of the cable jacket opening 625 decreases when the two strain relief grippers 610 are pivoted rearwardly. Consequently, a rearward movement of the cable 101 within the cable gland 300 causes the gripper bodies 620 to pivot rearwardly and thereby causes the gripping teeth 630 to bite increasingly deeper into the jacket, thus reinforcing the strain relief. The high pull force cable gland 300 so minimizes jacket displacement of the cable 101 to less than 2 mm when exposed to a pull force of 667 N.

In the opposite direction, that is when pushing the cable 101 forward through the high pull force cable gland 300 the cable jacket opening 625 expands as the gripper bodies 620 pivot forward. This allows easy installation of the cable 101 within the high pull force cable gland 300.

In practice, more than three gripping teeth 630 will be used. For example, between 6 and 20 teeth may be arranged on each gripper body 620 to form the inwardly convex serrated surface 621.

As shown in FIG. 7, the resilient pivot arm 640 may extend radially inwardly from the support arms 650 proximal to, but at a distance from a rear end 652 of the support arms 650.

In an alternative embodiment shown in FIG. 5 the rear end 652 of the support arms 650 seamlessly transitions into the resilient pivot arm 640.

While the present invention has been described with reference to exemplary embodiments, it will be readily apparent to those skilled in the art that the invention is not limited to the disclosed or illustrated embodiments but, on the contrary, is intended to cover numerous other modifications within the scope of the following claims.

### List of References

- 100: plug connector
- 101: cable
- 105: cable entry opening
- 110: plug housing
- 111: locking protrusion
- 120: cable entry protection
- 130: plug insert
- 150: pin contacts

- 200: socket connector
- 203: seal
- 205: cable entry opening
- 210: socket housing
- 211: lever
- 212: lever
- 230: socket insert
- 250: receptacle contacts

- 300: high pull force cable gland
- 301: center axis

- 500: strain relief body
- 501: external threaded sleeve
- 503: further external thread
- 510: annular groove
- 511: radial groove extensions

- 600: gripper module
- 610: strain relief grippers
- 620: gripper bodies
- 621: inwardly convex serrated gripping surface
- 625: cable jacket opening
- 630: gripping teeth
- 631: rearmost tooth
- 632: frontmost tooth
- 633: intermediate tooth
- 640: resilient pivot arm
- 641: pivot point
- 650: circumferentially distributed support arms
- 652: rear end
- 660: annular gripper base
- 661: anti-twist protrusions

- 700: outer shell
- 701: internal thread
- 710: conical inner wall

- d1: first distance
- d2: second distance
- d3: third distance

## Claims

1. A cable gland for an electrical connector, comprising:
an outer shell (700); and
a gripper module (600) comprising an annular gripper base (660) and a plurality of strain relief grippers (610) circumferentially distributed around a center axis (301) within the outer shell (700),
wherein each of the strain relief grippers (610) comprises
a gripper body (620) having an inwardly convex gripping surface,
a plurality of gripping teeth (630) formed in the gripping surface (621), and
a resilient pivot arm (640), about which the gripper body (620) can pivot forwardly and rearwardly,
**characterized by**
a strain relief body (500) having an annular groove (510), wherein the annular gripper base (660) is arranged within the annular groove (510) of the strain relief body (500).

2. The cable gland as in claim 1,
wherein a plurality of circumferentially distributed support arms (650) extend rearwardly parallel to the center axis from the annular gripper base (660),
in particular wherein one of the strain relief grippers (610) is connected to a rear end of each of the support arms (650).

3. The cable gland as in claim 2,
wherein the rear ends of the circumferentially distributed support arms (650) abut an inner wall of the outer shell (700).

4. The cable gland as in one of the preceding claims,
wherein the annular gripper base (660), the support arms (650), and the strain relief grippers (610) are integrally formed as one piece.

5. The cable gland as in one of the preceding claims,
further comprising an anti-twist protrusion (661) extending radially inwardly from the annular gripper base (660),
wherein in particular, the anti-twist protrusion (661) being seated within a radial groove extension (511) of the annular groove (510).

6. The cable gland as in one of the preceding claims,
wherein the strain relief body (500) comprises an external threaded sleeve (501) configured to mesh an internal thread of a plug housing (110).

7. The cable gland as in claim 6,
wherein a further external thread (503) meshes with an internal thread of the outer shell (700).

8. The cable gland as in one of the preceding claims,
wherein the gripper body (620) is configured to pivot back and forth about a pivot point (641).

9. The cable gland as in one of the preceding claims,
wherein the plurality of gripping teeth (630) includes a rearmost tooth (631) arranged at a first distance (d1) from the pivot point (641), and
preferably an intermediate tooth (633) arranged at a second distance (d2) from the pivot point (641), and
preferably a frontmost tooth (632) arranged at a third distance (d3) from the pivot point (641).

10. The cable gland as in claim 9,
wherein the first distance (d1) is smaller than the second distance (d2).

11. The cable gland as in claim 9 or 10,
wherein the second distance (d2) is smaller than the third distance (d3).

12. The cable gland as in one of the preceding claims,
wherein two of the strain relief grippers (610) are arranged on opposite sides of the center axis (301).

13. The cable gland as in one of the preceding claims,
wherein a width of a cable jacket opening (625) between the two strain relief grippers (610) increases when the two strain relief grippers (610) are pivoted forwardly and/or
wherein the width of the cable jacket opening (625) decreases when the two strain relief grippers (610) are pivoted rearwardly.

14. An electrical connector, comprising:
a housing (110) having a threaded cable entry opening (105),
the cable gland as in one of the preceding claims screwed into the threaded cable entry opening (105), and
a cable (101) extending through the cable gland.

15. The electrical connector of claim 14,
wherein the gripping teeth (630) engage a jacket of the cable (101), and
further in particular, wherein rearward movement of the cable (101) within the cable gland (300) causes the gripper bodies (620) to pivot rearwardly and thereby causes the gripping teeth (630) to bite increasingly deeper into the jacket.

## Patentansprüche

1. Eine Kabelverschraubung für einen elektrischen Steckverbinder, bestehend aus:
einem Außengehäuse (700); und
einem Greifermodul (600), das eine ringförmige Greiferbasis (660) und eine Vielzahl von Zugentlastungsgreifern (610) umfasst, die in Umfangsrichtung um eine Mittelachse (301) innerhalb des Außengehäuses (700) verteilt sind,
wobei jeder der Zugentlastungsgreifer (610) umfasst:
einen Greiferkörper (620) mit einer nach innen gewölbten Greiffläche,
eine Vielzahl von in der Greiffläche (621) ausgebildeten Greifzähnen (630), und
einen elastischen Schwenkarm (640), um den der Greiferkörper (620) nach vorne und nach hinten schwenkbar ist,
**gekennzeichnet durch**
einen Zugentlastungskörper (500) mit einer ringförmigen Nut (510), wobei die ringförmige Greiferbasis (660) innerhalb der ringförmigen Nut (510) des Zugentlastungskörpers (500) angeordnet ist.

2. Die Kabelverschraubung nach Anspruch 1,
wobei sich mehrere in Umfangsrichtung verteilte Stützarme (650) von der ringförmigen Greiferbasis (660) aus parallel zur Mittelachse nach hinten erstrecken,
insbesondere wobei einer der Zugentlastungsgreifer (610) mit einem hinteren Ende jedes der Stützarme (650) verbunden ist.

3. Die Kabelverschraubung nach Anspruch 2,
wobei die hinteren Enden der in Umfangsrichtung verteilten Stützarme (650) an einer Innenwand der Außenhülle (700) anliegen.

4. Die Kabelverschraubung nach einem der vorstehenden Ansprüche,
wobei die ringförmige Greiferbasis (660), die Stützarme (650) und die Zugentlastungsgreifer (610) einstückig ausgebildet sind.

5. Die Kabelverschraubung nach einem der vorstehenden Ansprüche,
die ferner einen Verdrehschutzvorsprung (661) umfasst, der sich von der ringförmigen Greiferbasis (660) radial nach innen erstreckt,
wobei insbesondere der Verdrehschutzvorsprung (661) in einer radialen Nutverlängerung (511) der ringförmigen Nut (510) sitzt.

6. Die Kabelverschraubung nach einem der vorstehenden Ansprüche,
wobei der Zugentlastungskörper (500) eine Außengewindehülse (501) umfasst, die so ausgebildet ist, dass sie in ein Innengewinde eines Steckergehäuses (110) eingreift.

7. Die Kabelverschraubung nach Anspruch 6,
wobei eine weitere Außengewindehülse (503) mit einem Innengewinde der Außenhülse (700) in Eingriff steht.

8. Die Kabelverschraubung nach einem der vorstehenden Ansprüche,
wobei der Greiferkörper (620) so ausgebildet ist, dass er um einen Drehpunkt (641) hin- und herschwenken kann.

9. Die Kabelverschraubung nach einem der vorstehenden Ansprüche,
wobei die Vielzahl von Greifzähnen (630) einen hintersten Zahn (631) umfasst, der in einem ersten Abstand (d1) vom Drehpunkt (641) angeordnet ist, und
vorzugsweise einen mittleren Zahn (633), der in einem zweiten Abstand (d2) vom Drehpunkt (641) angeordnet ist, und
vorzugsweise einen vordersten Zahn (632) umfasst, der in einem dritten Abstand (d3) vom Drehpunkt (641) angeordnet ist.

10. Die Kabelverschraubung nach Anspruch 9,
wobei der erste Abstand (d1) kleiner als der zweite Abstand (d2) ist.

11. Die Kabelverschraubung nach Anspruch 9 oder 10,
wobei der zweite Abstand (d2) kleiner als der dritte Abstand (d3) ist.

12. Die Kabelverschraubung nach einem der vorstehenden Ansprüche,
wobei zwei der Zugentlastungsklemmen (610) auf gegenüberliegenden Seiten der Mittelachse (301) angeordnet sind.

13. Kabelverschraubung nach einem der vorstehenden Ansprüche,
wobei die Breite einer Kabelmantelöffnung (625) zwischen den beiden Zugentlastungsgreifern (610) zunimmt, wenn die beiden Zugentlastungsgreifer (610) nach vorne geschwenkt werden, und/oder
wobei die Breite der Kabelmantelöffnung (625) abnimmt, wenn die beiden Zugentlastungsgreifer (610) nach hinten geschwenkt werden.

14. Ein elektrischer Steckverbinder, umfassend:
ein Gehäuse (110) mit einer Kabel-Eingangsöffnung (105) mit Gewinde,
die Kabelverschraubung gemäß einem der vorstehenden Ansprüche, die in die mit Gewinde versehene Kabeleingangsöffnung (105) eingeschraubt ist, und
ein Kabel (101), das sich durch die Kabelverschraubung erstreckt.

15. Der elektrische Steckverbinder nach Anspruch 14,
wobei die Greifzähne (630) einen Mantel des Kabels (101) ergreifen, und
insbesondere ferner **dadurch gekennzeichnet, dass** eine Rückwärtsbewegung des Kabels (101) innerhalb der Kabelverschraubung (300) bewirkt, dass die Greiferkörper (620) nach hinten verschwenken und dadurch die Greiferzähne (630) dazu bringen, zunehmend tiefer in den Mantel hineinzubeißen.

## Revendications

1. Un presse-étoupe pour connecteur électrique, comprenant :
une coquille extérieure (700) ; et
un module de préhension (600) comprenant une base de préhension annulaire (660) et une pluralité d'éléments de pince de décharge de traction (610) répartis circonférentiellement autour d'un axe central (301) à l'intérieur de la coquille extérieure (700),
dans lequel chacun des éléments de pince de décharge de traction (610) comprend
un corps de préhension (620) présentant une surface d'adhérence convexe vers l'intérieur,
une pluralité de dents de préhension (630) formées dans la surface d'adhérence (621), et
un bras de pivotement élastique (640), autour duquel le corps de préhension (620) peut pivoter vers l'avant et vers l'arrière,
**caractérisé par**
un corps de décharge de traction (500) présentant une rainure annulaire (510), la base de préhension annulaire (660) étant disposée à l'intérieur de la rainure annulaire (510) du corps de décharge de traction (500).

2. Le presse-étoupe selon la revendication 1,
dans lequel une pluralité de bras de support (650) répartis circonférentiellement s'étendent vers l'arrière parallèlement à l'axe central à partir de la base de préhension annulaire (660),
en particulier dans lequel l'une des pinces de décharge de traction (610) est reliée à une extrémité arrière de chacun des bras de support (650).

3. Le presse-étoupe selon la revendication 2,
dans lequel les extrémités arrière des bras de support (650) répartis circonférentiellement viennent en butée contre une paroi intérieure de l'enveloppe extérieure (700).

4. Le presse-étoupe selon l'une des revendications précédentes,
dans lequel la base de préhension annulaire (660), les bras de support (650) et les pinces de décharge de traction (610) sont formés d'un seul tenant.

5. Le presse-étoupe selon l'une des revendications précédentes,
comprenant en outre une saillie anti-torsion (661) s'étendant radialement vers l'intérieur à partir de la base de préhension annulaire (660),
dans lequel, en particulier, la saillie anti-torsion (661) est logée dans un prolongement de rainure radiale (511) de la rainure annulaire (510).

6. Le presse-étoupe selon l'une des revendications précédentes,
dans lequel le corps de décharge de traction (500) comprend un manchon fileté à l'extérieur (501) configuré pour s'engager dans un filetage interne d'un boîtier de fiche (110).

7. Le presse-étoupe selon la revendication 6,
dans lequel un autre filetage extérieur (503) s'engage dans un filetage intérieur de la coquille extérieure (700).

8. Le presse-étoupe selon l'une des revendications précédentes,
dans lequel le corps de préhension (620) est configuré pour pivoter d'avant en arrière autour d'un point de pivot (641).

9. Le presse-étoupe selon l'une des revendications précédentes,
dans lequel la pluralité de de préhension (630) comprend une dent la plus en arrière (631) disposée à une première distance (d1) du point de pivotement (641), et
de préférence une dent intermédiaire (633) disposée à une deuxième distance (d2) du point de pivotement (641), et
de préférence une dent la plus en avant (632) disposée à une troisième distance (d3) du point de pivotement (641).

10. Le presse-étoupe selon la revendication 9,
dans lequel la première distance (d1) est inférieure à la deuxième distance (d2).

11. Le presse-étoupe selon la revendication 9 ou 10,
dans lequel la deuxième distance (d2) est inférieure à la troisième distance (d3).

12. Le presse-étoupe selon l'une des revendications précédentes,
dans lequel deux des pinces de décharge de traction (610) sont disposées de part et d'autre de l'axe central (301).

13. Le presse-étoupe selon l'une des revendications précédentes,
dans lequel la largeur d'une ouverture de gaine de câble (625) entre les deux pinces de décharge de traction (610) augmente lorsque les deux pinces de décharge de traction (610) sont pivotées vers l'avant et/ou
dans lequel la largeur de l'ouverture de la gaine de câble (625) diminue lorsque les deux pinces de décharge de traction (610) sont pivotées vers l'arrière.

14. Un connecteur électrique, comprenant :
un boîtier (110) comportant une ouverture d'entrée de câble filetée (105),
le presse-étoupe selon l'une des revendications précédentes vissé dans l'ouverture d'entrée de câble filetée (105), et
un câble (101) s'étendant à travers le presse-étoupe.

15. Le connecteur électrique selon la revendication 14,
dans lequel les de préhension (630) s'engagent dans une gaine du câble (101), et en outre, en particulier, dans lequel le déplacement vers l'arrière du câble (101) à l'intérieur du presse-étoupe (300) provoque le pivotement vers l'arrière des corps de préhension (620) et entraîne ainsi un enfoncement de plus en plus profond de dents de préhension (630) dans la gaine.
